(19) Europäisches Patentamt
European Patent Office
Office européen des brevets

(11) **EP 2 884 240 B1**

(12) **EUROPEAN PATENT SPECIFICATION**

(45) Date of publication and mention
of the grant of the patent:
**13.07.2016 Bulletin 2016/28**

(51) Int Cl.:
**G01D 5/347** *(2006.01)*     *G06K 9/20* *(2006.01)*

(21) Application number: **13196389.4**

(22) Date of filing: **10.12.2013**

(54) **High-precision angle positioning device**

Hochgenaue Winkeleinstellungsvorrichtung

Dispositif de positionnement angulaire de haute précision

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **National Chung-Shan Institute of
Science and
Technology
Taoyuan City (TW)**

(72) Inventors:
• **Yi-Yuh, Hwang
Taipei City Taiwan 116 (TW)**
• **Guang-Sheen, Liu
Zhongli City Taiwan 320 (TW)**
• **Chin-Der, Hwang
Zhubei City Taiwan 302 (TW)**
• **Wei-Guo, Chang
Taoyuan City Taiwan 330 (TW)**
• **Chih-Ming, Liao
Taoyuan City Taiwan 330 (TW)**

(74) Representative: **Becker Kurig Straus et al
Patentanwälte
Bavariastrasse 7
80336 München (DE)**

(56) References cited:
**EP-A1- 1 160 538     EP-A1- 2 641 694
US-B1- 6 222 174**

## Description

## BACKGROUND OF THE INVENTION

### 1. Field of the Invention

The present invention relates to angle positioning technologies, and more particularly to a high-precision angle positioning device constituted by a rotary disk unit, a non-deformable laser-speckles image-acquiring unit, an angle calibrating unit, an angle recognizing and positioning unit, and a storage unit.

### 2. Description of the Prior Art

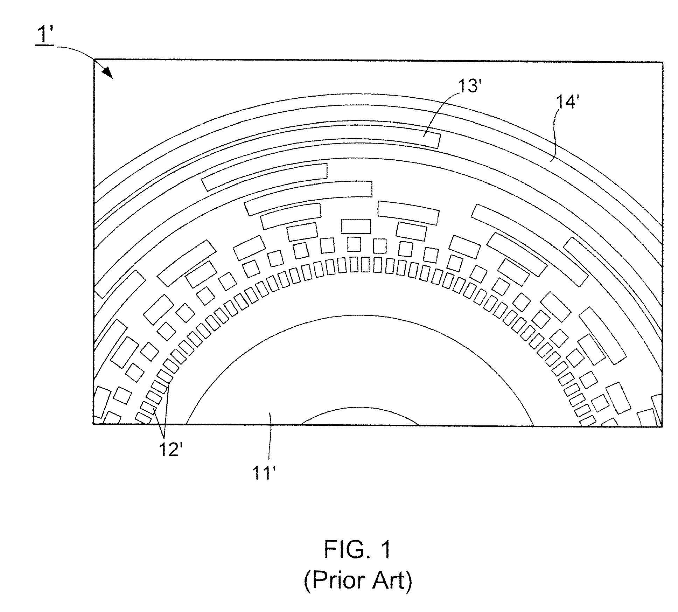

During Second World War, magnetic angle sensors are developed and applied in tanks, so as to facilitate the gun turret of the tank be able to rotate by a precise angle under any harsh environments. Furthermore, with the development of science and technology, optical angle sensor is subsequently proposed. Please refer to FIG. 1, which illustrates a schematic structure view of an absolute positioning circular grating. As shown in FIG. 1, the absolute positioning circular grating 1' includes a rotary shaft 11' and 9 annular gratings, wherein the innermost (9-th) annular grating 12' is partitioned to 512 portions ($2^9$); and so on, the second annular grating 13' is partitioned to 4 portions ($2^2$), and the first annular grating 14' is partitioned to 2 portions ($2^1$). Moreover, 9 optical sensors are respectively disposed on the 9 annular gratings for sensing the brightness (1) and darkness (0) produced on the 9 annular gratings, such that the absolute positioning circular grating 1' is able to access a binary code (for example, 000000001) for representing an absolute angle coordinate.

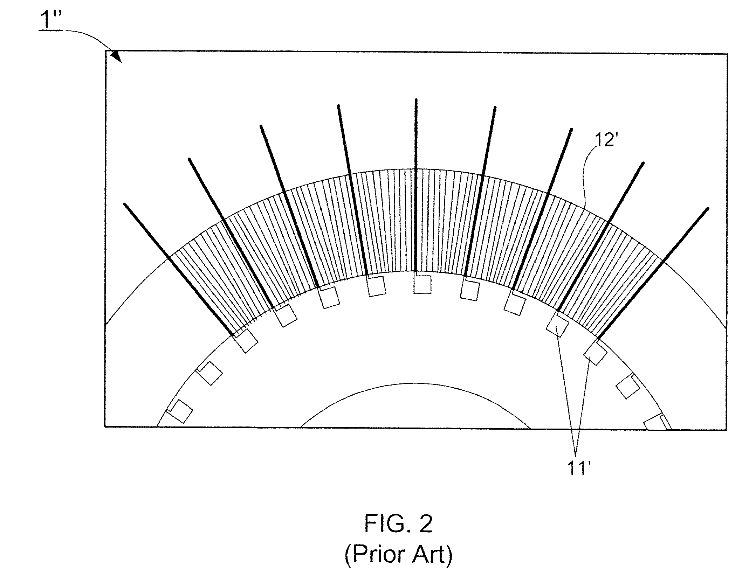

For the above-mentioned absolute positioning circular grating 1', the partition number of the 9-th annular grating 12' decides the angle positioning accuracy of the absolute positioning circular grating 1'; and that means the angle positioning accuracy of the absolute positioning circular grating 1' cannot be further advanced. For above reasons, another high-precision absolute positioning circular grating shown as FIG. 2 is proposed. As shown in FIG. 2, the high-precision absolute positioning circular grating 1" includes an inner annular grating 11" and an outer annular grating 12", wherein the outer annular grating 12" is an equidistant grating and the inner annular grating 11" is an non-equidistant grating. Thus, by such grating arrangement, the high-precision absolute positioning circular grating 1" is able to access an absolute angle coordinate.

Using non-deformable laser speckels image-acquiring unit for positioning device is already known from EP2641694. This is nevertheless restricted to linear positioning device.

However, the conventional high-precision absolute positioning circular gratings include the shortcomings and drawbacks as follows:

1. Because it is very difficult to manufacture and calibrate the high-precision absolute positioning circular grating, the commercial price of the high-precision absolute positioning circular grating is non-linear increased with the positioning accuracy.
2. The primary problem of the high-precision absolute positioning circular grating is how to assembly the high-precision absolute positioning circular grating onto a rotary bearing shaft of an angle positioning equipment without producing any shaft concentricity errors.

Accordingly, the inventor of the present application has made great efforts to make inventive research thereon and eventually provided a high-precision angle positioning device.

## SUMMARY OF THE INVENTION

The primary objective of the present invention is to provide a high-precision angle positioning device; wherein, comparing with the conventional high-precision absolute positioning circular grating, the present invention establishes a high-precision and industry-competitive angle positioning sensor by using low-priced rotary disk unit, non-deformable laser-speckles image-acquiring unit, angle calibrating unit, angle recognizing and positioning unit, and storage unit. Moreover, differing from the conventional high-precision absolute positioning circular grating, the high-precision angle positioning device firstly uses the non-deformable laser-speckles image-acquiring unit to acquire N sheets of non-deformable laser-speckles image from a positioning surface of the rotary disk unit during the rotary disk unit is turned a full circle, and then defines and records N sheets of coordinated non-deformable laser-speckles image and N numbers of coordinated angle through an angle calibrating unit and an angle recognizing and positioning unit; therefore, after finding an i-th coordinated non-deformable laser-speckles image having the largest overlapping area with an immediate non-deformable laser-speckles image through image comparison between the immediate non-deformable laser-speckles image and the N coordinated non-deformable laser-speckles images in the storage unit, an immediate image plane displacement between the immediate non-deformable laser-speckles image and the i-th coordinated non-deformable laser-speckles image can be calculated for further calculating an immediate sub-coordinated angle of the immediate non-deformable laser-speckles image, such that an immediate angle coordinate for the immediate non-deformable laser-speckles image can be calculated through an i-th coordinated angle of the i-th coordinated non-deformable laser-speckles image and the immediate sub-coordinated angle.

Accordingly, to achieve the primary objective oaf the present invention, the inventors propose a high-precision angle positioning device, comprising:

a rotary disk unit;

a non-deformable laser-speckles image-acquiring unit, used for emitting a coherent light to a positioning surface of the rotary disk unit, so as to acquire a non-deformable laser-speckles image of the positioning surface by receiving a reflected light coming from the positioning surface;

an angle calibrating unit, used for measuring and calibrating a calibrated angle coordinate of the non-deformable laser-speckles image;

an angle recognizing and positioning unit, coupled to the non-deformable laser-speckles image-acquiring unit and the angle calibrating unit; and

a storage unit, used for storing the non-deformable laser-speckles image acquired by the non-deformable laser-speckles image-acquiring unit and the calibrated angle coordinate measured by the angle calibrating unit;

wherein when turning the rotary disk unit a full circle, the non-deformable laser-speckles image-acquiring unit would accordingly acquire N sheets of non-deformable laser-speckles image, and the angle calibrating unit would simultaneously measure N numbers of calibrated angle coordinate for the N sheets of non-deformable laser-speckles image; therefore, the angle recognizing and positioning unit is able to define N sheets of coordinated non-deformable laser-speckles image and N numbers of coordinated angle according to the N numbers of calibrated angle coordinate and the N sheets of non-deformable laser-speckles image, and then the N sheets of coordinated non-deformable laser-speckles image and the N numbers of coordinated angle are stored in the storage unit;

wherein when turning the rotary disk unit by an arbitrary angle, the non-deformable laser-speckles image-acquiring unit would accordingly acquire an immediate non-deformable laser-speckles image, and the angle recognizing and positioning unit would find an i-th coordinated non-deformable laser-speckles image having the largest overlapping area with the immediate non-deformable laser-speckles image through image comparison between the immediate non-deformable laser-speckles image and the N coordinated non-deformable laser-speckles images in the storage unit, and then calculates an immediate image plane displacement between the immediate non-deformable laser-speckles image and the i-th coordinated non-deformable laser-speckles image, so as to calculate an immediate sub-coordinated angle of the immediate non-deformable laser-speckles image; so that, an immediate angle coordinate for the immediate non-deformable laser-speckles image can be calculated through an i-th coordinated angle of the i-th coordinated non-deformable laser-speckles image and the immediate sub-coordinated angle.

## BRIEF DESCRIPTION OF THE DRAWINGS

The invention as well as a preferred mode of use and advantages thereof will be best understood by referring to the following detailed description of an illustrative embodiment in conjunction with the accompanying drawings, wherein::

FIG. 1 is a schematic structure view of an absolute positioning circular grating;
FIG. 2 is a schematic structure view of a high-precision absolute positioning circular grating;
FIG. 3 is a framework view of a high-precision angle positioning device according to the present invention;
FIG. 4A is a stereo view of a rotary disk unit of the high-precision angle positioning device;
FIG. 4B is the stereo view of the rotary disk unit;
FIG. 4C is the stereo view of the rotary disk unit;
FIG. 5 shows images of laser-speckles;
FIG. 6A and FIG. 6B are SAD analysis plots for the laser-speckles images;
FIG. 7 is a second framework view of the high-precision angle positioning device according to the present invention;
FIG. 8 shows images of non-deformable laser-speckles acquired by the non-deformable laser-speckles image-acquiring unit; and
FIG. 9 is a third framework view of the high-precision angle positioning device according to the present invention.

## DETAILED DESCRIPTION OF THE PREFERRED EMBODIMENTS

To more clearly describe a high-precision angle positioning device according to the present invention, embodiments of the present invention will be described in detail with reference to the attached drawings hereinafter.

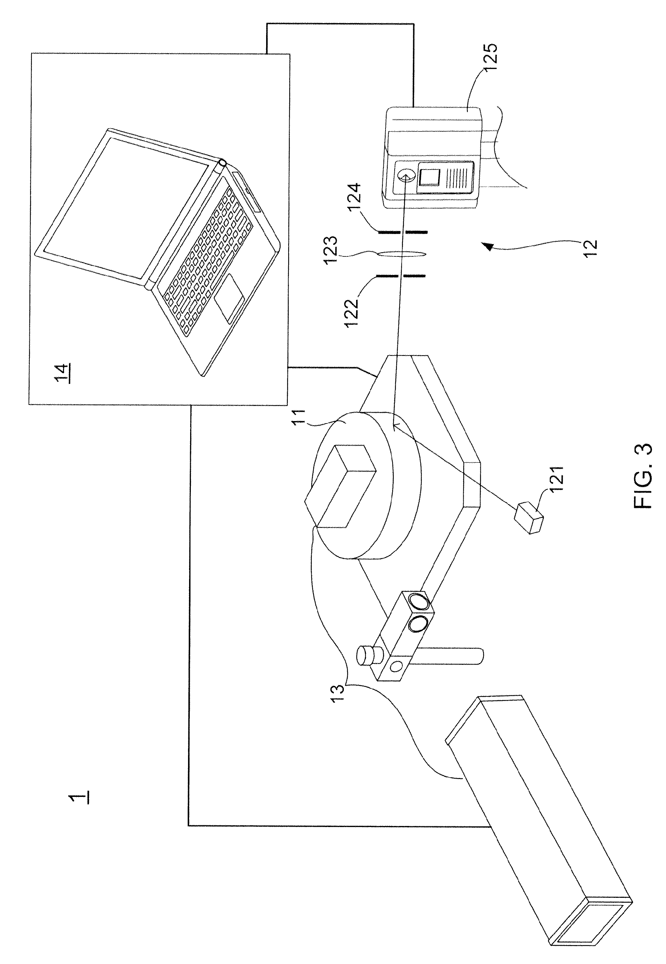

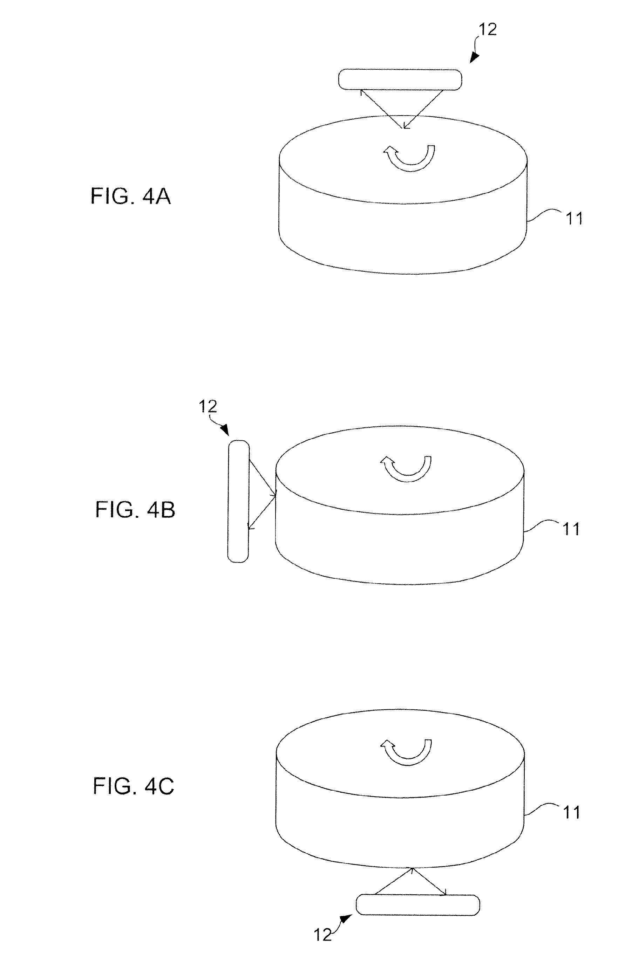

With reference to FIG. 3, which illustrates a framework view of a high-precision angle positioning device according to the present invention. As shown in FIG. 3, the high-precision angle positioning device 1 of the present invention consists of: a rotary disk unit 11, a non-deformable laser-speckles image-acquiring unit 12, an angle calibrating unit 13, an angle recognizing and positioning unit 14, and a storage unit in the angle recognizing and positioning unit 14. Please simultaneously refer to the stereo diagrams shown in FIG. 4A, FIG. 4B and FIG. 4C, wherein the non-deformable laser-speckles image-acquiring unit 12 is used for emitting a laser light to a positioning surface of the rotary disk unit 11, so as to acquire a non-deformable laser-speckles image of the positioning surface by receiving a reflected light coming from the positioning surface. In the high-precision angle positioning device 1, the positioning surface can be the top surface of the rotary disk unit 11 (FIG. 4A), the side surface of the rotary disk unit 11 (FIG. 4B) or the bottom surface of the rotary disk unit 11 (FIG. 4C).

As shown in FIG. 3, the non-deformable laser-speckles image-acquiring unit 12 consists of a light-emitting member 121, a front-stage aperture 122, a lens 123, and a 2D image sensor 125, wherein the light-emitting member 121 is used for emitting the laser light to the positioning surface of the rotary disk unit 11, and the front-stage aperture 122 is used for filtering scattering lights of the laser light. Moreover, the lens 123 is used for forming the non-deformable laser-speckles image resulted from making the laser light emit to the positioning surface, and the back-stage aperture 124 is used for controlling the size of laser-speckles of the non-deformable laser-speckles image. The 2D image sensor 125 can be a CCD image sensor or a CMOS image sensor, which is used for sensing and recording the non-deformable laser-speckles image formed through the lens 123. Herein, it needs to further explain that, the incident laser light angle between the light-emitting member 121 and the normal direction of the positioning surface is different from the reflective laser light angle between the 2D image sensor 125 and the normal direction of the positioning surface by 10 degree. Moreover, the non-deformable laser-speckles image coming from the positioning surface of the rotary disk unit 11 would include uniqueness because any one surface of an arbitrary object usually reveals unique surface texture. In order to determine whether the aforesaid non-deformable laser-speckles image acquired by the non-deformable laser-speckles image-acquiring unit 12 includes uniqueness or not, a related experiment has been finished through following experiment steps:

> step (1): taking 50μm as an image-acquiring distance, and then using the non-deformable laser-speckles image-acquiring unit 12 to acquire 1200 sheets of non-deformable laser-speckles image from the top surface of a stainless steel plate, and simultaneously measuring and recording 1200 positions corresponding to the 1200 sheets of non-deformable laser-speckles image through a laser interferometer, so as to establish 1200 sheets of coordinated non-deformable laser-speckles image;
> step (2): storing the 1200 sheets of coordinated non-deformable laser-speckles image and 1200 related coordinated positions in the storage unit of the angle recognizing and positioning unit 14;
> step (3): using the non-deformable laser-speckles image-acquiring unit 12 to acquire an immediate non-deformable laser-speckles image at 3cm on the top surface of the stainless steel plate; and
> step (4): the angle recognizing and positioning unit 14 using an image comparison library module, i.e., the SAD (Sum of Absolute Difference) to execute a image comparing process between the immediate non-deformable laser-speckles image and the 1200 coordinated non-deformable laser-speckles image one by one.

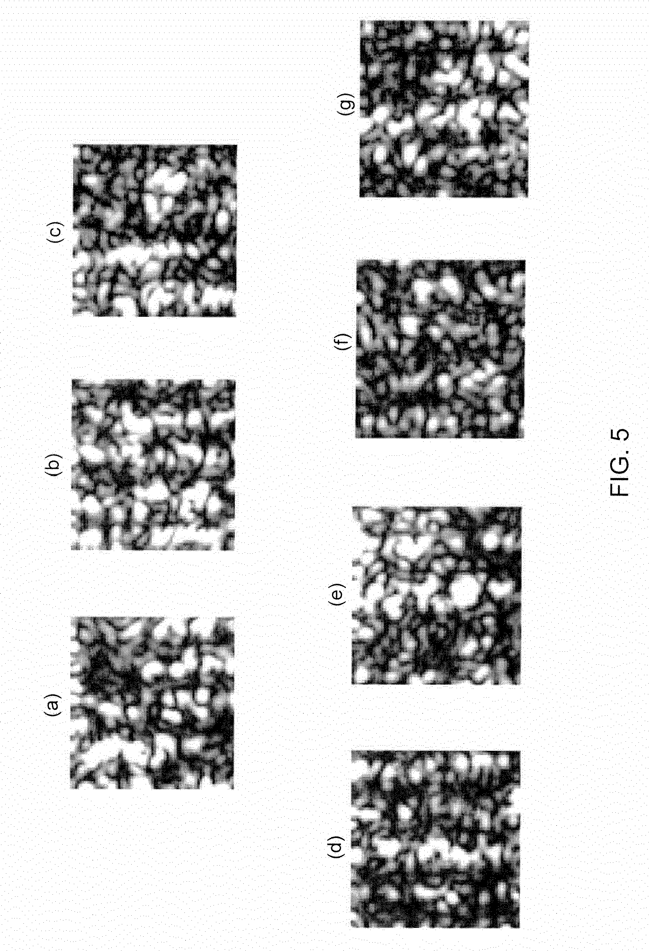

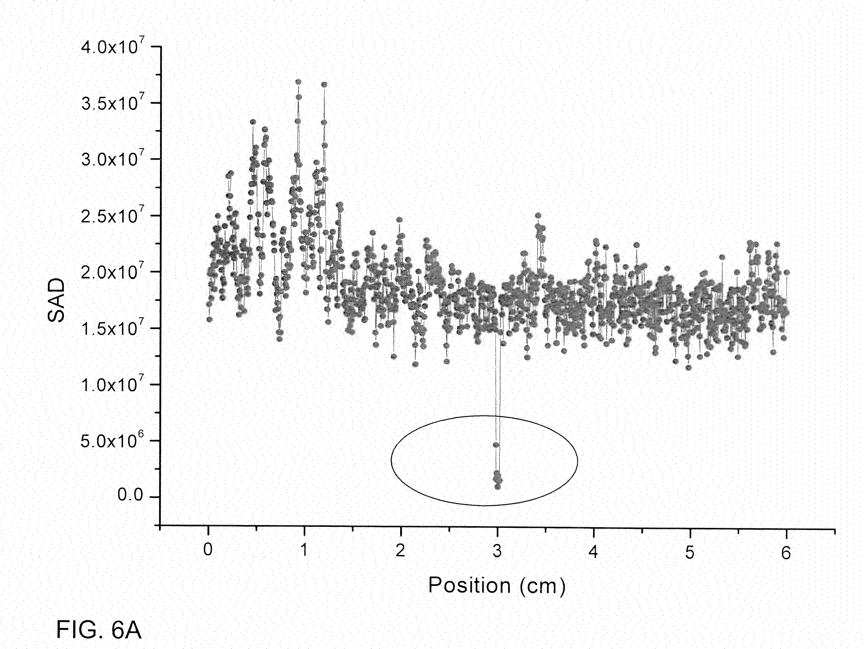

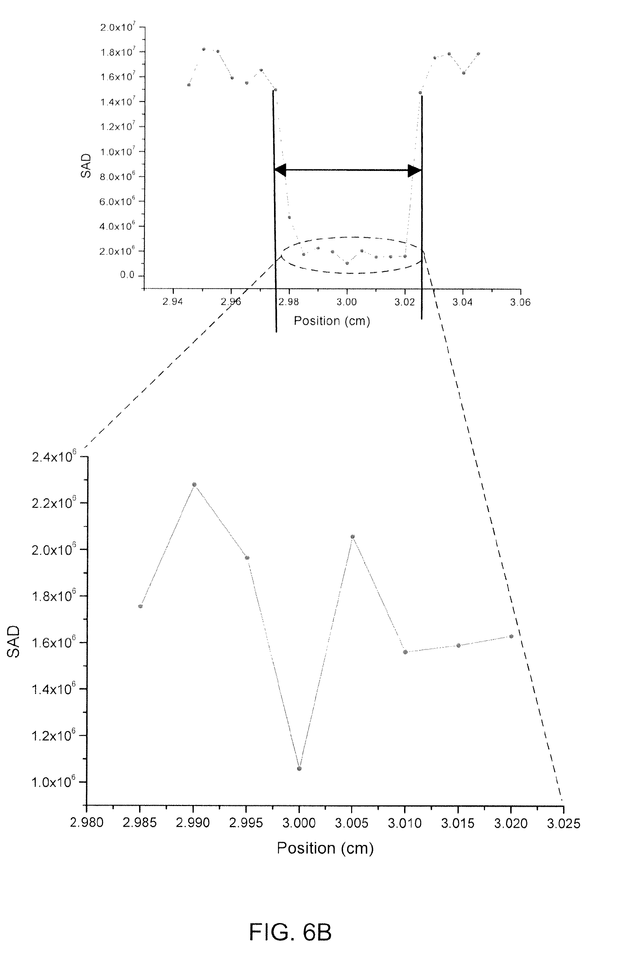

FIG. 5 shows several non-deformable laser-speckles images, wherein image (a), image (b), image (c), image (d), image (e), image (f), image (g) respectively represent the coordinated laser-speckles images acquired at the position of 0μm (i.e., the origin position), 10000.73μm, 20001.57μm, 29999.04μm. 39999.95μm, 50001.18μm, and 60001.94μm. Therefore, through the SAD analysis plots of the non-deformable laser-speckles images shown in FIG. 6, it can find that the coordinated non-deformable laser-speckles image acquired at the position of 29999.04μm reveals the smallest SAD value after being treated the image comparing process with the immediate non-deformable laser-speckles image acquired at the position of 3cm, and that means there is only one coordinated non-deformable laser-speckles image in the storage unit which is the most similar to the immediate non-deformable laser-speckles image, and this coordinated non-deformable laser-speckles image has the largest overlapping area with the immediate non-deformable laser-speckles image.

Thus, through above experiment, the uniqueness of the non-deformable laser-speckles images acquired from an object surface has been proven; moreover, the experiment results are also confirmed that the non-deformable laser-speckles image acquiring technology can be applied in surface position. However, besides being applied in surface position, as the framework shown in FIG. 3, the non-deformable laser-speckles image acquiring technology can be further applied for positioning angle coordinates when the non-deformable laser-speckles image acquiring technology is operated together with an angle calibrating unit 13. Herein, it needs to especially explain stress that, before applying the non-deformable laser-speckles image acquiring technology to position angle coordinates, the following conditions must be satisfied:

> (1) the maximum relative optical path length difference of any two adjacent non-deformable coordinated laser-speckles image must be limited to be smaller than one fifth of the wavelength of the laser light;
> (2) an overlapping length between any two adjacent coordinated non-deformable laser-speckles images stored in the storage unit must be limited to be greater than one half of the length of the coordinated non-deformable laser-speckles image; and
> (3) a non-deformable laser-speckles image acquiring range of the non-deformable laser-speckles image-acquiring unit 12 must be limited to be smaller than or equal to a permitted movable distance of the non-deformable laser-speckles image.

So that, the two adjacent non-deformable laser-speckles images in the overlapping area would reveal almost exactly the same laser-speckles image because the displacement of the two adjacent non-deformable laser-speckles image is smaller than the permitted movable distance of the non-deformable laser-speckles image; therefore, by using the image comparison library module such as SAD, SSD, NCC, or SIFT, it is able to precisely calculate the image plane displacement coordinate (dx', dy') resulted from the rotation of the rotary disk unit 11 and produced on the 2D image sensor 125, wherein the dx' and the dy' are respectively an x'-axis component and a y'-axis component of the image plane displacement of the aforesaid two non-deformable laser-speckles images in the overlapping area. Furthermore, an object plane placement of (dx, dy) between the aforesaid two non-deformable laser-speckles images can be easily calculated through the mathematical formulas of dx=dx'/M and dy=dy'/M, wherein M represents the optical magnification of the non-deformable laser-speckles image-acquiring unit 12.

Through above descriptions, it is able to know that, the relative surface position method of the non-deformable laser-speckles image acquiring technology can become an absolute surface position method by using the angle calibrating unit 13 to measure and record the coordinates of all non-deformable laser-speckles images, and define a plurality of coordinated non-deformable laser-speckles images according to the non-deformable laser-speckles images and their related coordinates. Therefore, after finding an i-th coordinated non-deformable laser-speckles image having the largest overlapping area with an immediate non-deformable laser-speckles image through image comparison between the immediate non-deformable laser-speckles image and the N coordinated non-deformable laser-speckles images in the storage unit, an immediate image plane displacement between the immediate non-deformable laser-speckles image and the i-th coordinated non-deformable laser-speckles image can be calculated for further calculating an immediate sub-coordinated angle of the immediate non-deformable laser-speckles image, such that an immediate angle coordinate for the immediate non-deformable laser-speckles image can be calculated through an i-th coordinated angle of the i-th coordinated non-deformable laser-speckles image and the immediate sub-coordinated angle.

**Embodiment I**

FIG. 3 shows first framework of the high-precision angle positioning device 1 proposed by the present invention, and the angle calibrating unit 13 in the first framework is an Agilent® 5530 dynamic calibrator. To use the first framework of the high-precision angle positioning device 1 to execute the angle positioning operation, it needs to firstly turn the rotary disk unit 11 a full circle, and the non-deformable laser-speckles image-acquiring unit 12 would accordingly acquire N sheets of non-deformable laser-speckles image and (N+1)-th sheet of non-deformable laser-speckles image from the positioning surface of the rotary disk unit 11, and the angle calibrating unit 13 would simultaneously measure N numbers of calibrated angle coordinate for the N sheets of non-deformable laser-speckles image. Moreover, the angle recognizing and positioning unit 14 would determine whether the (N+1)-th sheet of non-deformable laser-speckles image exceed the first sheet of non-deformable aser-speckles image through image comparison between the (N+1)-th non-deformable laser-speckles image and the first non-deformable laser-speckles image. If the (N+1)-th non-deformable laser-speckles image exceeds the first non-deformable laser-speckles image, it means that the calibrated angle coordinate of the (N+1)-th non-deformable laser-speckles image is over 360°, so that the non-deformable laser-speckles image-acquiring unit 12 can be stopped acquiring the non-deformable laser-speckles images from the positioning surface of the rotary disk unit 11. In the present invention, the image comparison library module can be SAD (Sum Absolute Difference), SSD (Sum Squared Difference), NCC (Normalized Cross Correlation), or SIFT (Scale Invariant Feature Transform). Therefore, the angle recognizing and positioning unit 14 is able to define N sheets of coordinated non-deformable laser-speckles image and N numbers of coordinated angles according to the N calibrated angle coordinates and the N non-deformable laser-speckles images, and then the N coordinated non-deformable laser speckles image and the N coordinated angles are stored in the storage unit.

To define N coordinated non-deformable laser-speckles image and N coordinated angles by using the Agilent® 5530 dynamic calibrator, the non-deformable laser-speckles image-acquiring unit 12 and the angle recognizing and positioning unit 14, for example, a first calibrated angle coordinate measured by the Agilent® 5530 dynamic calibrator for a first non-deformable laser-speckles image is defined to a first coordinated angle $\theta_1=0$, such that a first coordinated non-deformable laser-speckles image with $\theta_1=0$ is then obtained. Similarly, a second coordinated non-deformable laser-speckles image with a second coordinated angle $\theta_2$, ..., and a N-th coordinated non-deformable laser-speckles image with a N-th coordinated angle $\theta_n$ are also be defined and obtained. Therefore, the obtained N coordinated angles and N coordinated non-deformable laser-speckles image are then stored in the storage unit of the angle recognizing and positioning unit 14.

Next, the image comparison module of SIFT is used for comparing all image plane displacements between each of two adjacent coordinated non-deformable laser-speckles images stored in the storage unit. For example, the first coordinated non-deformable laser-speckles image and the second coordinated non-deformable laser-speckles image have a first image plane displacement $d_1'$, the second coordinated non-deformable laser-speckles image and the third coordinated non-deformable laser-speckles image have a second image plane displacement $d_2'$, ..., the (N-1)-th coordinated non-deformable laser-speckles image and the N-th coordinated non-deformable laser-speckles image have a (N-1)-th image plane displacement $d_{n-1}'$, and the N-th coordinated non-deformable laser-speckles image and the first coordinated non-deformable laser-speckles image have a N-th image plane displacement $d_n'$. Therefore, the a total image plane displacement $\Sigma D$ after the rotary disk unit 11 is turned a full circle can be calculated by the mathematic formula of $\Sigma D=d1'+ d2'+ \cdots + d(n-1)'+ dn'$. Thus, by using the mathematic formula of $\theta sub=\Delta d(360°/\Sigma D)$, an immediate sub-coordinated angle of an immediate non-deformable laser-speckles image can be calculated, wherein $\theta sub$ represents the immediate sub-coordinated angle of the immediate non-deformable laser-speckles image, and $\Delta d$ represents an immediate image plane displacement between the immediate non-deformable laser-speckles image and an i-th coordinated non-deformable laser-speckles image having the largest overlapping area with the immediate non-deformable laser-speckles image.

To calculate an immediate angle coordinate for the immediate non-deformable laser-speckles image, it is able to turn the rotary disk unit 11 by an arbitrary angle and position an immediate angle. When turning the rotary disk unit 11 by the arbitrary angle, the non-deformable laser-speckles image-acquiring unit 12 would accordingly acquire an immediate non-deformable laser-speckles image, and the angle recognizing and positioning unit 14 would find an i-th coordinated non-deformable laser-speckles image having the largest overlapping area with the immediate non-deformable laser-speckles image, and then calculates the immediate image plane displacement $\Delta d$ between the immediate non-deformable laser-speckles image and the i-th coordinated non-deformable laser-speckles image, so as to calculate the immediate sub-coordinated angle of the immediate non-deformable laser-speckles image. Eventually, the immediate angle coordinate $\theta_{imme}$ for the immediate non-deformable laser-speckles image can be calculated by using the mathematic formula of $\theta_{imme}=\theta_i +(\Delta dx360^0)/\Sigma D$, so as to complete the angle positioning operation; wherein $\theta_i$ represents the i-th coordinated angle of the i-th coordinated non-deformable laser-speckles image.

Herein, it needs to further explain that, when using the Agilent® 5530 dynamic calibrator as the angle calibrating unit 13, the high-precision angle positioning device 1 proposed by the present invention includes two angle-positioning error source of (1) the position error on the coordinated angles caused by the Agilent® 5530 dynamic calibrator and (2) the image plane position error $\delta$ on image comparison resulted from executing the image comparison between the immediate non-deformable laser-speckles image and the coordinated non-deformable laser-speckles images. In the embodiment I, the position error on the coordinated angles caused by the Agilent® 5530 dynamic calibrator is 0.5". The position accuracy of the commercial high-precision angle sensor is 1", and the outer radius of the commercial high-precision angle sensor is 20cm~30cm; so that, the rotation circumference of the high-precision angle sensor can be calculated to about 60cm~100cm. In addition, because the pixel size of the commercial CCD sensor or COMS sensor is ranged from $1\mu m$ to $5\mu m$, the $\delta$ can be calculated to about 0.02 pixel ~ 0.01 pixel (i.e., 10 nm ~ 100 nm) by using SIFT. Therefore, when the optical magnification M of the non-deformable laser-speckles image-acquiring unit 12 is 1, the angle-position error value between the immidiated non-deformable laser-speckles image and the i-th coordinated non-deformable laser-speckles image can be calculated to $(360x60x60)/(D/\delta)\approx(0.2"~0.013")$. Thus, the angle-positioning error value of the high-precision angle positioning device 1 proposed by the present invention is about 0.7" (0.5"+0.2"). So that, the angle-positioning error value of 0.7" is able to meet the requirement of a high-precision absolute angle positioning sensor.

**Embodiment II**

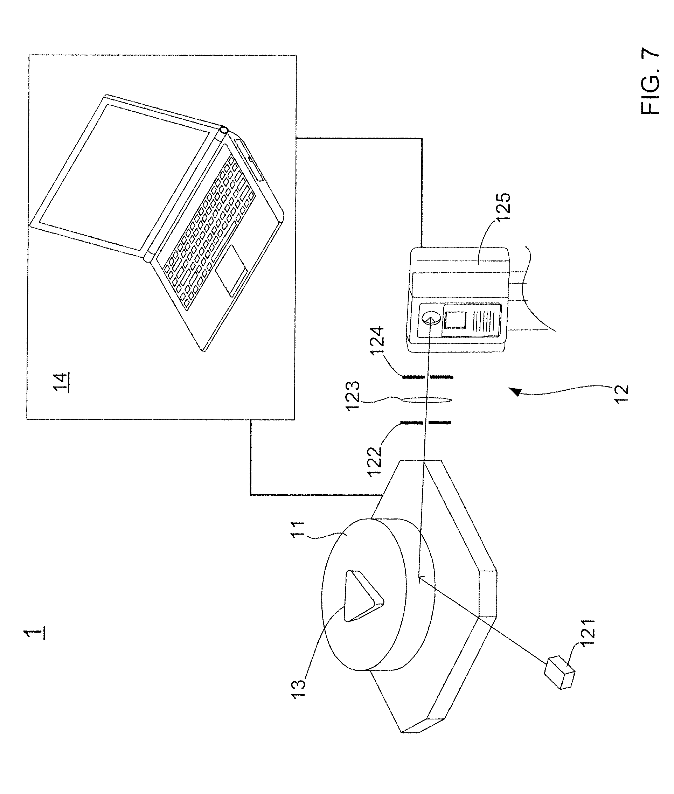

With reference to FIG. 7, which illustrate a second framework of the high-precision angle positioning device 1 proposed by the present invention, and the angle calibrating unit 13 in the second framework is a inertial laser gyroscope. To use the second framework of the high-precision angle positioning device 1 to execute the angle positioning operation, it needs to obtain the N sheets of coordinated non-deformable laser-speckles image and N numbers of coordinated angle by operating following steps:

Firstly, turning the rotary disk unit 11 a full circle by setting the rotational speed of the rotary disk unit 11 be 10 °/s, and adjusting the image-acquiring repetition of the 2D image sensor 125 between 1kHz and 10kHz. When the rotary disk unit 11 is rotated, the non-deformable laser-speckles image-acquiring unit 12 would accordingly acquire N sheets of non-deformable laser-speckles image from the positioning surface of the rotary disk unit 11, and the angle recognizing and positioning unit 14 would simultaneously access a period number $k_i$ and a phase coordinate $\phi_i$ of a beat frequency signal outputted by the inertial laser gyroscope at the same time.

Inheriting to above descriptions, because a first accumulation period number and a first phase coordinate for the first non-deformable laser-speckles image is defined to $k_1=0$ and $\phi_1=0$, respectively, the first coordinated non-deformable laser-speckles image with $k_1=0$ and $\phi_1=0$ is then obtained. Moreover, the second coordinated non-deformable laser-speckles image with a second accumulation period number $k_2+(\phi_2/360)$, ..., and the N-th coordinated non-deformable laser-speckles image with a N-th accumulation period number $k_n+(\phi_n/360)$ can also be defined and obtained. Herein, the image plane displacement between the first coordinated non-deformable laser-speckles image and N-th coordinated non-deformable laser-speckles image is calculate to dn', and the corresponding period number of the beat frequency signal outputted by the inertial laser gyroscope is set to $\Delta k$. Therefore, for dn' :$(\Sigma D-dn')=\Delta k:(k_n+(\phi_n/360))$, $\Delta k$ can be calculated by formula of $\Delta k=dn'(k_n+(\phi_n/360))/(\Sigma D-dn')$. Moreover, because the total accumulation period number $\Sigma k$ of the beat frequency signal can be calculated by the mathematic formula of $\Sigma k=k_n+(\phi_n/360)+\Delta k$, it is able to calculated the N numbers of coordinated angle corresponding to the N sheets of coordinated non-deformable laser-speckles image by using the mathematic formula of $\theta_i = (k_i + \theta_i/360)\times(360/\Sigma k)$.

After the N sheets of coordinated non-deformable laser-speckles image and the N numbers of coordinated angle are recorded, the total image plane displacement after the rotary disk unit 11 is turned a full circle, i.e., $\Sigma D$, needs to be calculated by the formula of $\Sigma D=d1'+d2'+\cdots+-d(n-1)'+dn'$. Next, to calculate an immediate angle coordinate for the immediate non-deformable laser-speckles image, it is able to turn the rotary disk unit 11 by an arbitrary angle and position an immediate angle. When turning the rotary disk unit 11 by the arbitrary angle, the non-deformable laser-speckles image-acquiring unit 12 would accordingly acquire an immediate non-deformable laser-speckles image, and the angle recognizing and positioning unit 14 would find an i-th coordinated non-deformable laser-speckles image having the largest overlapping area with the immediate non-deformable laser-speckles image from the storage unit, so as to calculate the immediate image plane displacement $\Delta d$ between the immediate non-deformable laser-speckles image and the i-th coordinated non-deformable laser-speckles image. Therefore, the immediate sub-coordinated angle of the immediate non-deformable laser-speckles image can be calculated by using the formula of $\theta_{sub}=\Delta d(360°/\Sigma D)$.

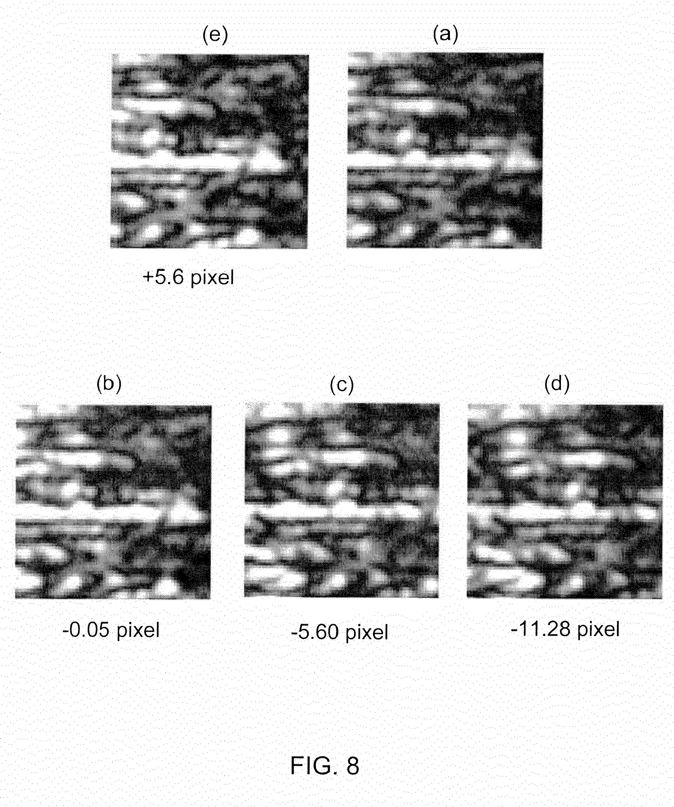

Please refer to FIG. 8, there are shown several non-deformable laser-speckles images. In which, image (a) is the immediate non-deformable laser-speckles image, and images (b), (c), (d), and (e) are respectively the i-th coordinated non-deformable laser-speckles image, the (i-1)-th coordinated non-deformable laser-speckles image, the (i-2)-th coordinated non-deformable laser-speckles image, and the (i+1)-th coordinated non-deformable laser-speckles image stored in the storage unit. By using the image comparison library module of SIFT, it can find that image plane displacement $\Delta d$ between the i-th coordinated non-deformable laser-speckles image (image (b)) and the immediate non-deformable laser-speckles image (image (a)) is -0.05 pixel, and that means the immediate non-deformable laser-speckles image leads the i-th coordinated non-deformable laser speckles image by 0.05 pixel; on the contrary, because the image plane displacement $\Delta d$ between the (i+1)-th coordinated non-deformable laser-speckles image (image (e)) and the immediate non-deformable laser-speckles image (image (a)) is +5.6 pixel, the (i+1)-th coordinated non-deformable laser-speckles image exceeds the immediate non-deformable laser-speckles image by 5.6 pixel. Based on the image comparison results, it is able to confirm that the i-th coordinated non-deformable laser-speckles image (image (b)) has the largest laser-speckles image overlapping region with the immediate non-deformable laser-speckles image (image (a)); therefore, because the coordinated angle of the i-th coordinated non-deformable laser-speckles image is $\theta_i$, the immediate angle coordinate of the immediate non-deformable laser-speckles image can be easily calculated by formula of $\theta_{imme}=\theta_i +(\Delta dx360°)/\Sigma D$. so as to complete the angle positioning operation.

Herein, it needs to further explain that, when using the inertial laser gyroscope such as Honeywell GG1320 Digital Laser Gyroscope be the angle calibrating unit 13, the angle-positioning error value of the high-precision angle positioning device 1 proposed by the present invention can also be estimated. Firstly, because the rotational speed of the rotary disk unit 11 is 10 °/s, the rotary disk unit 11 spends 36 seconds (i.e., 0.01 hr) turning a full circle, and the bias stability of Honeywell GG1320 Digital Laser Gyroscope is 0.0035 deg/hr, the angle-positioning accuracy of the Honeywell GG1320 Digital Laser Gyroscope can be calculated to $0.0035 \times 0.01 = 3.5 \times 10^{-5}$ deg = 0.126", and the angle-positioning error value of the high-precision angle positioning device 1 can be calculated to $0.126"+0.2"\leqq 0.4"$, wherein 0.2"is the angle-position error value between the immidiated non-deformable laser-speckles image and the i-th coordinated non-deformable laser-speckles image. So that, the angle-positioning error value of 0.4" is able to meet the requirement of a high-precision absolute angle positioning sensor.

## Embodiment III

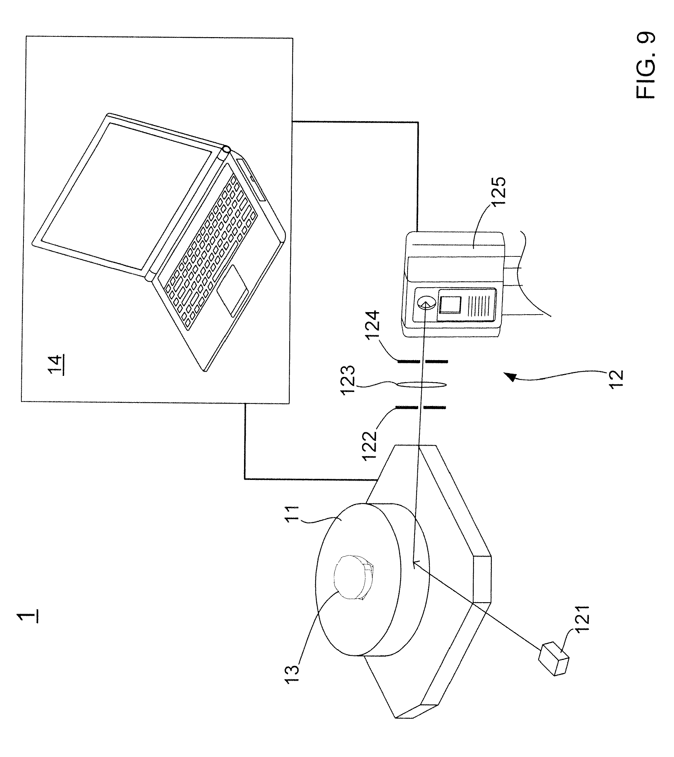

With reference to FIG. 9, which illustrate a third framework of the high-precision angle positioning device I proposed by the present invention, and the angle calibrating unit 13 in the third framework is a inertial fiber optic gyroscope. To use the third framework of the high-precision angle positioning device 1 to execute the angle positioning operation, it needs to obtain the N sheets of coordinated non-deformable laser-speckles image and N numbers of coordinated angle by operating following steps:

Firstly, turning the rotary disk unit 11 a full circle by setting the rotational speed of the rotary disk unit 11 be 10 °/s, and adjusting the image-acquiring repetition of the 2D image sensor 125 between 1kHz and 10kHz. When the rotary disk unit 11 is rotated, the non-deformable laser-speckles image-acquiring unit 12 would accordingly acquire N sheets of non-deformable laser-speckles image from the positioning surface of the rotary disk unit 11, and the angle recognizing and positioning unit 14 would simultaneously access N numbers of calibrated angle coordinate respectively corresponding to the N sheets of non-deformable laser-speckles image. In which, a first calibrated angle coordinate corresponding to the first non-deformable laser-speckles image is $\theta_1'$, a second calibrated angle coordinate corresponding to the second non-deformable laser-speckles image is $0_2'$, ..., and a N-th calibrated angle coordinate corresponding to the N-th non-deformable laser-speckles image is $\theta_n'$. Thu, a first coordinated angle can be defined to $\theta_1=\theta_1'-\theta_i'=0$, and then the first coordinated non-deformable laser-speckles image with the first coordinated angle is obtained. Similarly, the second coordinated non-deformable laser-speckles image with the second coordinated angle of $\theta_2=\theta_2'-\theta_1'$, ..., and the N-th coordinated non-deformable laser-speckles image with the N-th coordinated angle of $\theta_n=\theta_n'-\theta_1'$ can also be obtained. Then, the N sheets of coordinated non-deformable laser-speckles image and the N numbers of coordinated angle are stored in the storage unit of the angle recognizing and positioning unit 14.

After the N sheets of coordinated non-deformable laser-speckles image and the N numbers of coordinated angle are recorded, the total image plane displacement after the rotary disk unit 11 is turned a full circle, i.e., $\Sigma D$, needs to be calculated by the formula of $\Sigma D=d1'+d2'+ \cdots + d(n-1)'+dn'$. Next, to calculate an immediate angle coordinate for the immediate non-deformable laser-speckles image, it is able to turn the rotary disk unit 11 by an arbitrary angle and position an immediate angle. When turning the rotary disk unit 11 by the arbitrary angle, the non-deformable laser-speckles image-acquiring unit 12 would accordingly acquire an immediate non-deformable laser-speckles image, and the angle recognizing and positioning unit 14 would find an i-th coordinated non-deformable laser-speckles image having the largest overlapping area with the immediate non-deformable laser-speckles image from the storage unit, so as to calculate the immediate image plane displacement $\Delta d$ between the immediate non-deformable laser-speckles image and the i-th coordinated non-deformable laser-speckles image. Therefore, the immediate sub-coordinated angle of the immediate non-deformable laser-speckles image can be calculated by using the formula of $\theta sub=\Delta d(360°/\Sigma D)$. Therefore, because the coordinated angle of the i-th coordinated non-deformable laser-speckles image is $\theta_i$, the immediate angle coordinate of the immediate non-deforrnable laser-speckles image can be easily calculated by formula of $\theta_{imme}=\theta_i+(\Delta dx360°)/\Sigma D$, so as to complete the angle positioning operation.

Herein, it needs to further explain that, when using the inertial laser gyroscope such as Honeywell Fiber Optic Gyroscope be the angle calibrating unit 13, the angle-positioning error value of the high-precision angle positioning device 1 proposed by the present invention can also be estimated. Firstly, because the rotational speed of the rotary disk unit 11 is 10 °/s, the rotary disk unit 11 spends 36 seconds (i.e., 0.01 hr) turning a full circle, and the bias stability of Honeywell Fiber Optic Gyroscope is 0.0003 deg/hr, the angle-positioning accuracy of the Honeywell Fiber Optic Gyroscope can be calculated to $0.0003x0.01= 3x10^{-6}$ deg $\approx 0.01''$ ($=3x10^{-6}x60x60$ arc second), and the angle-positioning error value of the high-precision angle positioning device 1 can be calculated to $0.01''+0.2''\leq0.3'$, wherein 0.2" is the angle-position error value between the immediate non-deformable laser-speckles image and the i-th coordinated non-deformable laser-speckles image. So that, the angle-positioning error value of 0.3" is able to meet the requirement of a high-precision absolute angle positioning sensor. Moreover, by way of making the positioning accuracy from $0.1\mu m$ to 10nm or increasing the rotation circumference of the rotary disk unit 11 from 1m to 10m, it is possible to make the angle-positioning accuracy of the high-precision angle positioning devicel 1 reach 0.03" ($=0.01''+0.02''$).

Thus, through the descriptions, the frameworks, operation procedures and technology features of the high-precision angle positioning device proposed by the present invention have been completely introduced and disclosed; in summary, the present invention has the following advantages:

1. Comparing with the conventional high-precision absolute positioning circular grating, the present invention establishes a high-precision and industry-competitive angle positioning sensor by using low-priced rotary disk unit 11, non-deformable laser-speckles image-acquiring unit 12, angle calibrating unit 13, angle recognizing and positioning unit 14, and storage unit.

2. Differing from the conventional high-precision absolute positioning circular grating, the high-precision angle positioning device 1 of the present invention firstly uses a non-deformable laser-speckles image-acquiring unit 12 to acquire N sheets of non-deformable laser-speckles image from a positioning surface of a rotary disk unit 11 during the rotary disk unit 11 is turned a full circle, and then defines and records N sheets of coordinated non-deformable laser-speckles image and N numbers of coordinated angle through an angle calibrating unit 13 and an angle recognizing and positioning unit 14; therefore, after finding an i-th coordinated non-deformable laser-speckles image having the largest overlapping area with an immediate non-deformable laser-speckles image through image comparison between the immediate non-deformable laser-speckles image and the N coordinated non-deformable laser-speckles images in the storage unit, an immediate image plane displacement between the immediate non-deformable laser-speckles image and the i-th coordinated non-deformable laser-speckles image can be calculated for further calculating an immediate sub-coordinated angle of the immediate non-deformable laser-speckles image, such that an immediate angle coordinate for the immediate non-deformable laser-speckles image can be calculated through an i-th coordinated angle of the i-th coordinated non-deformable laser-speckles image and the immediate sub-coordinated angle.

3. Moreover, no matter the angle calibrating unit 13 in the framework of the high-precision angle positioning device 1 is the Agilent® 5530 dynamic calibrator, the inertial laser gyroscope or the inertial fiber optic gyroscope, the positioning accuracy of the high-precision angle positioning device1 is able to meet the requirement of a high-precision absolute angle positioning sensor.

The above description is made on embodiments of the present invention. However, the embodiments are not intended to limit scope of the present invention, and all equivalent implementations or alterations within the spirit of the present invention still fall within the scope of the present invention.

## Claims

1. A high-precision angle positioning device (1), comprising:

   a rotary disk unit (11)
   a non-deformable laser-speckles image-acquiring unit (12), being used for emitting a coherent light to a positioning surface of the rotary disk unit (11), so as to acquire a non-deformable laser-speckles image of the positioning surface by receiving a reflected light coming from the positioning surface;
   an angle calibrating unit (13), being used for measuring and calibrating a calibrated angle coordinate of the non-deformable laser-speckles image;
   an angle recognizing and positioning unit (14), being coupled to the non-deformable laser-speckles image-acquiring unit (12) and the angle calibrating unit (13); and
   a storage unit (14), being used for storing the non-deformable laser-speckles image acquired by the non-deformable laser-speckles image-acquiring unit (12) and the calibrated angle coordinate measured by the angle calibrating unit (13);
   wherein when turning the rotary disk unit (11) a full circle, the non-deformable laser-speckles image-acquiring unit (12) would accordingly acquire N sheets of non-deformable laser-speckles image, and the angle calibrating unit (13) would simultaneously measure N numbers of calibrated angle coordinate for the N sheets of non-deformable laser-speckles image; therefore, the angle recognizing and positioning (14) is able to define N sheets of coordinated non-deformable laser-speckles image and N numbers of coordinated angle according to the N calibrated angle coordinates and the N non-deformable laser-speckles images, and then the N coordinated non-deformable laser-speckles images and the N coordinated angles are stored in the storage unit (14);
wherein when turning the rotary disk unit (11) by an arbitrary angle, the non-deformable laser-speckles image-acquiring unit (12) would accordingly acquire an immediate non-deformable laser-speckles image, and the angle recognizing and positioning unit (14) would find an i-th coordinated non-deformable laser-speckles image having the largest overlapping area with the immediate non-deformable laser-speckles image through image comparison between the immediate non-deformable laser-speckles image and the N coordinated non-deformable laser-speckles images in the storage unit (14), and then calculates an immediate image plane displacement between the immediate non-deformable laser-speckles image and the i-th coordinated non-deformable laser-speckles image, so as to calculate an immediate sub-coordinated angle of the immediate non-deformable laser-speckles image;
wherein an immediate angle coordinate for the immediate non-deformable laser-speckles image can be calculated through an i-th coordinated angle of the i-th coordinated non-deformable laser-speckles image and the immediate sub-coordinated angle.

2. The high-precision angle positioning device of claim 1, wherein the positioning surface is selected from the group consisting of: top surface of the rotary disk unit, side surface of the rotary disk unit and bottom surface of the rotary disk unit.

3. The high-precision angle positioning device of claim 1, wherein the plurality of the image comparison library module is selected from the group consisting of:

   SAD (Sum of Absolute Difference), SSD (Sum of Squared Difference), NCC (Normalized Cross Correlation), and SIFT (Scale Invariant Feature Transform).

4. The high-precision angle positioning device of claim 1, wherein the non-deformable laser-speckles image-acquiring unit comprises:

   a light-emitting member, being used for emitting a laser light to the positioning surface of the rotary disk unit;

a front-stage aperture, being used for filtering scattering lights of the laser light;

a lens, being used for forming the non-deforrnable laser-speckles image resulted from making the laser light emit to the positioning surface;

a back-stage aperture, being used for controlling the size of laser-speckles of the reflected light coming from the positioning surface of the rotary disk unit;

a 2D image sensor, being a CCD image sensor or a CMOS image sensor; wherein the non-deformable laser-speckles image formed through the lens is sensed and recorded by the image sensor.

5. The high-precision angle positioning device of claim 4, wherein the angle calibrating unit is selected from the group consisting of: Agilent® 5530 dynamic calibrator, inertial laser gyroscope and inertial fiber optic gyroscope.

6. The high-precision angle positioning device of claim 5, wherein when the angle calibrating unit is the aforesaid inertial laser gyroscope, the coordinated angles, the immediate sub-coordinated angles and the immediate angle of the immediate non-deformable laser-speckles image can be calculated by using following equations: $(1)\theta_i =(k_i + \phi_i/360)x(360/\Sigma k)$, $(2)\theta sub=\Delta d(360°/\Sigma D)$, and $(3)\theta_{imme} =\theta_i +\theta sub$; wherein:

$\theta_i$ represents the i-th coordinated angle of the i-th coordinated non-deformable laser-speckles image;

$\theta sub$ represents the immediate sub-coordinated angle of the immediate non-deformable laser-speckles image;

$(k_i +\phi_i/360)$ represents an accumulation period number of a beat frequency signal for the i-th coordinated non-deformable laser-speckles image, wherein the beat frequency signal is outputted by the inertial laser gyroscope;

$\Sigma k$ represents a total accumulation period number of the beat frequency signal after the rotary disk unit is turned a full circle;

$\Delta d$ represents the immediate image plane displacement between the immediate non-deformable laser-speckles image and the i-th coordinated non-deformable laser-speckles image;

$\Sigma D$ represents a total image plane displacement after the rotary disk unit is turned a full circle; and

$\theta_{imme}$ represents the immediate angle coordinate of the immediate non-deformable laser-speckles image.

7. The high-precision angle positioning device of claim 5, wherein when the angle calibrating unit is the aforesaid inertial fiber optic gyroscope, the coordinated angles, the immediate sub-coordinated angles and the immediate angle of the immediate non-deformable laser-speckles image can be calculated by using following equations: $(1)$ $\theta_i=\theta_i'-\theta_1'$, $(2)$ $\theta sub=\Delta d(360°/\Sigma D)$, and $(3)\theta_{imme} =\theta_i +\theta sub$; wherein:

$\theta_i$ represents the i-th coordinated angle of the i-th coordinated non-deformable laser-speckles image;

$\theta_i'$ represents an i-th calibrated angle coordinate outputted by the inertial fiber optic gyroscope;

$\theta_1=\theta_1'-\theta_1'=\theta$;

$\theta sub$ represents the immediate sub-coordinated angle of the immediate non-deformable laser-speckles image; and

$\Delta d$ represents the immediate image plane displacement between the immediate non-deformable laser-speckles image and the i-th coordinated non-deformable laser-speckles image;

$\Sigma D$ represents a total image plane displacement after the rotary disk unit is turned a full circle after the rotary disk unit is turned a full circle; and

$\theta_{imme}$ represents the immediate angle coordinate of the immediate non-deformable laser-speckles image.

8. The high-precision angle positioning device of claim 5, wherein when the angle calibrating unit is the aforesaid Agilent® 5530 dynamic calibrator, the coordinated angles, the immediate sub-coordinated angles and the immediate angle of the immediate non-deformable laser-speckles image can be calculated by using following equations: $(1)$ $\theta sub=\Delta d(360°/\Sigma D)$ and $(2)\theta_{imme} =\theta_i+\theta sub$; wherein:

$\theta_i$ represents the i-th coordinated angle of the i-th coordinated non-deformable laser-speckles image;

$\theta sub$ represents the immediate sub-coordinated angle of the immediate non-deformable laser-speckles image; and

$\Delta d$ represents the immediate image plane displacement between the immediate non-deformable laser-speckles image and the i-th coordinated laser-speckles image;

$\Sigma D$ represents a total image plane displacement after the rotary disk unit is turned a full circle; and

$\theta_{imme}$ represents the immediate angle coordinate of the immediate non-deformable laser-speckles image.

9. The high-precision angle positioning device of claim 4, wherein the maximum relative optical path length difference of any two adjacent non-deformable coordinated laser-speckles image must be limited to be smaller than one fifth of the wavelength of the laser light; moreover, an overlapping length between any two adjacent coordinated laser-speckles images stored in the storage unit must be limited to be greater than one half of the length of the coordinated laser-speckles image; furthermore, a laser-speckles image acquiring range of the non-deformable laser-speckles image-acquiring unit must be limited to be smaller than or equal to a permitted movable distance of the non-deformable laser-speckles image.

**Patentansprüche**

1. Hochpräzise Winkelpositionierungsvorrichtung (1), umfassend:

> eine Rotationsscheibeneinheit (11)
> eine nichtverformbare Laser-Speckle-Bilderfassungseinheit (12), die zum Emittieren eines kohärenten Lichts an eine Positionierungsfläche der Rotationsscheibeneinheit (11), um so ein nichtverformbares Laser-Speckle-Bild der Positionierungsfläche durch Empfangen eines reflektierten Lichts zu erfassen, das von der Positionierungsfläche kommt;
> eine Winkelkalibriereinheit (13),
> die zum Messen und Kalibrieren einer kalibrierten Winkelkoordinate des nichtverformbaren Laser-Speckle-Bildes verwendet wird;
> eine Winkelerkennungs- und -Positionierungseinheit (14), die mit der nichtverformbaren Laser-Speckle-Bilderfassungseinheit (12) und der Winkelkalibriereinheit (13) verbunden ist; und
> eine Speichereinheit (14), die zum Speichern des nichtverformbaren Laser-Speckle-Bildes, das durch die nichtverformbare Laser-Speckle-Bilderfassungseinheit (12) erfasst wird, und der kalibrierten Winkelkoordinate verwendet wird, die durch die Winkelkalibriereinheit (13) gemessen wird;
> wobei beim Drehen der Rotationsscheibeneinheit (11) um einen vollen Kreis die nichtverformbare Laser-Speckle-Bilderfassungseinheit (12) dementsprechend N Bögen von nichtverformbaren Laser-Speckle-Bildern erfassen würde, und die Winkelkalibriereinheit (13) gleichzeitig N Zahlen der kalibrierten Winkelkoordinate für die N Bögen des nichtverformbaren Laser-Speckle-Bildes messen; daher kann die Winkelerkennung und -positionierung (14) N Bögen des koordinierten nichtverformbaren Laser-Speckle-Bildes und N Zahlen des koordinierten Winkels gemäß den N kalibrierten Winkelkoordinaten und den N nichtverformbaren Laser-Speckle-Bildern definieren, und dann werden die N koordinierten nichtverformbaren Laser-Speckle-Bilder und die N koordinierten Winkel in der Speichereinheit (14) gespeichert;

> wobei beim Drehen der Rotationsscheibeneinheit (11) um einen beliebigen Winkel die nichtverformbare Laser-Speckle-Bilderfassungseinheit (12) dementsprechend ein unmittelbares nichtverformbares Laser-Speckle-Bild erfassen würde, und die Winkelerkennungs- und -positionierungseinheit (14) würde ein i-tes koordiniertes nichtverformbares Laser-Speckle-Bild finden, das den größten Überlappungsbereich mit dem unmittelbaren nichtverformbaren Laser-Speckle-Bild hat, durch Bildvergleich zwischen dem unmittelbaren nichtverformbaren Laser-Speckle-Bild und den N koordinierten nichtverformbaren Laser-Speckle-Bildern in der Speichereinheit (14),
> und berechnet dann eine unmittelbare Bildebenenverschiebung zwischen dem unmittelbaren nichtverformbaren Laser-Speckle-Bild und dem i-ten koordinierten nichtverformbaren Laser-Speckle-Bild, um so einen unmittelbaren subkoordinierten Winkel des unmittelbaren nichtverformbaren Laser-Speckle-Bild zu berechnen;
> wobei eine unmittelbare Winkelkoordinate für das unmittelbare nichtverformbare Laser-Speckle-Bild durch einen i-ten koordinierten Winkel des i-ten koordinierten nichtverformbaren Laser-Speckle-Bild und den unmittelbaren subkoordinierten Winkel berechnet werden kann.

2. Hochpräzise Winkelpositionierungsvorrichtung nach Anspruch 1, wobei die Positionierungsfläche aus der folgenden Gruppe ausgewählt wird: obere Fläche der Rotationsscheibeneinheit, Seitenfläche der Rotationsscheibeneinheit und Bodenfläche der Rotationsscheibeneinheit.

3. Hochpräzise Winkelpositionierungsvorrichtung nach Anspruch 1, wobei die mehreren Bildvergleichs-Bibliotheksmodule ausgewählt werden aus der Gruppe, bestehend aus: SAD (Summe der Absoluten Differenz), SSD (Summe der Quadrierten Differenz), NCC (Normalisierte Kreuzkorrelation) und SIFT (Skalierungsinvariante Merkmalstransformation).

4. Hochpräzise Winkelpositionierungsvorrichtung nach Anspruch 1, wobei die nichtverformbare Laser-Speckle-Bilderfassungseinheit umfasst:

> ein lichtemittierendes Element, das zum Emittieren eines Laserlichts zur Positionierungsfläche der Rotationsscheibeneinheit verwendet wird;
> eine Vorderstufenöffnung, die zum Filtern von gestreutem Licht des Laserlichts verwendet wird;
> ein Objektiv, das zum Bilden des nichtverformbaren Laser-Speckle-Bildes verwendet wird, welches daraus resultiert, dass das Laserlicht zur Positionierungsfläche emittiert wird; eine Hinterstufenöffnung, die zum Steuern der Größe von Laser-Speckles des reflektierten Lichts verwendet wird, welches von der Positionierungsfläche der Rotationsscheibeneinheit kommt; einen 2D-Bildsensor, der ein CCD-Bildsensor oder ein CMOS-Bildsensor ist; wobei das nichtverformbare Laser-Speckle-Bild, das durch das Objektiv gebildet wird, durch den Bildsensor erfasst und aufgezeichnet wird.

5. Hochpräzise Winkelpositionierungsvorrichtung nach Anspruch 4, wobei die Winkelkalibriereinheit aus der Gruppe bestehend aus einem Agilent® 5530-Dynamikkalibrator, Trägheits-Lasergyroskop und Trägheits-Faseroptik-Gyroskop ausgewählt wird.

6. Hochpräzise Winkelpositionierungsvorrichtung nach Anspruch 5, wobei, wenn die Winkelkalibriereinheit das genannte Trägheits-Lasergyroskop ist, die koordinierten Winkel, die unmittelbaren subkoordinierten Winkel und der unmittelbare Winkel des unmittelbaren nichtverformbaren Laser-Speckle-Bildes unter Verwendung der folgenden Gleichungen berechnet werden können: (1) $\theta_i = (k_i + \phi_i/360) \times (360/\Sigma_k)$, (2) $\theta sub = \Delta d (360°/\Sigma D)$ und (3) $\theta_{imme} = \theta_i + \theta sub$; wobei:

$\theta_i$ den i-ten koordinierten Winkel des i-ten koordinierten nichtverformbaren Laser-Speckle-Bildes darstellt;
$\theta sub$ den unmittelbaren subkoordinierten Winkel des unmittelbaren nichtverformbaren Laser-Speckle-Bildes darstellt;
$(k_i + \Phi_i/360)$ eine Akkumulationsperiodennummer eines Taktfrequenzsignals für das i-te koordinierte nichtverformbare Laser-Speckle-Bild darstellt, wobei das Taktfrequenzsignal durch das Trägheits-Lasergyroskop ausgegeben wird;
$\Sigma k$ eine Gesamt-Akkumulationsperiodennummer des Taktfrequenzsignals, nachdem die Rotationsscheibeneinheit einen vollen Kreis gedreht wurde;
$\Delta d$ die unmittelbare Bildebenenverschiebung zwischen dem unmittelbaren nichtverformbaren Laser-Speckle-Bild und dem i-ten koordinierten nichtverformbaren Laser-Speckle-Bild darstellt;
$\Sigma D$ eine Gesamt-Bildebenenverschiebung darstellt, nachdem die Rotationsscheibeneinheit um einen vollen Kreis gedreht wurde;
$\theta_{imme}$ die unmittelbare Winkelkoordinate des unmittelbaren nichtverformbaren Laser-Speckle-Bildes darstellt.

7. Hochpräzise Winkelpositionierungsvorrichtung nach Anspruch 5, wobei, wenn die Winkelkalibriereinheit das genannte Trägheits-Faseroptik-Gyroskop ist, die koordinierten Winkel, die unmittelbaren subkoordinierten Winkel und der unmittelbare Winkel des unmittelbaren nichtverformbaren Laser-Speckle-Bildes unter Verwendung der folgenden Gleichungen berechnet werden können: (1) $\theta_i = \theta_i' - \theta_1'$, (2) $\theta sub = \Delta d(360°/\Sigma D)$ und (3) $\theta_{imme} = \theta_i + \theta sub$; wobei:

$\theta_i$ den i-ten koordinierten Winkel des i-ten koordinierten nichtverformbaren Laser-Speckle-Bildes darstellt;
$\theta_i'$ die i-te kalibrierte Winkelkoordinate darstellt, die vom Trägheits-Faseroptik-Gyroskop ausgegeben wird;

$$\theta_1 = \theta_1' - \theta_1' = 0;$$

$\theta sub$ den unmittelbaren subkoordinierten Winkel des unmittelbaren nichtverformbaren Laser-Speckle-Bildes darstellt; und
$\Delta d$ die unmittelbare Bildebenenverschiebung zwischen dem unmittelbaren nichtverformbaren Laser-Speckle-Bild und dem i-ten koordinierten nichtverformbaren Laser-Speckle-Bild darstellt;
$\Sigma D$ eine Gesamt-Bildebenenverschiebung darstellt, nachdem die Rotationsscheibeneinheit einen vollen Kreis gedreht wurde, nachdem die Rotationsscheibeneinheit einen vollen Kreis gedreht wurde; und
$\theta_{imme}$ die unmittelbare Winkelkoordinate des unmittelbaren nichtverformbaren Laser-Speckle-Bildes darstellt.

8. Hochpräzise Winkelpositionierungsvorrichtung nach Anspruch 5, wobei, wenn die Winkelkalibriereinheit der genannte Agilent® 5530-Dynamikkalibrator ist, die koordinierten Winkel, die unmittelbaren subkoordinierten Winkel und der unmittelbare Winkel des unmittelbaren nichtverformbaren Laser-Speckle-Bildes unter Verwendung der folgenden Gleichungen berechnet werden können: (1) $\theta sub = \Delta d(360°/\Sigma D)$ und (2) $\theta_{imme} = \theta_i + \theta sub$; wobei:

$\theta_i$ den i-ten koordinierten Winkel des i-ten koordinierten nichtverformbaren Laser-Speckle-Bildes darstellt;
$\theta sub$ den unmittelbaren subkoordinierten Winkel des unmittelbaren nichtverformbaren Laser-Speckle-Bildes darstellt; und
$\Delta d$ die unmittelbare Bildebenenverschiebung zwischen dem unmittelbaren nichtverformbaren Laser-Speckle-Bild und dem i-ten koordinierten nichtverformbaren Laser-Speckle-Bild darstellt;

$\Sigma D$ eine Gesamt-Bildebenenverschiebung darstellt, nachdem die Rotationsscheibeneinheit einen vollen Kreis gedreht wurde, nachdem die Rotationsscheibeneinheit einen vollen Kreis gedreht wurde; und

$\theta_{imme}$ die unmittelbare Winkelkoordinate des unmittelbaren nichtverformbaren Laser-Speckle-Bildes darstellt.

9.  Hochpräzise Winkelpositionierungsvorrichtung nach Anspruch 4, wobei die maximale relative optische Weglängendifferenz von zwei beliebigen benachbarten nichtverformbaren Laser-Speckle-Bildern so begrenzt werden muss, dass sie kleiner als ein Fünftel der Wellenlänge des Laserlichts ist; außerdem muss eine überlappende Länge zwischen zwei benachbarten koordinierten Laser-Speckle-Bildern, die in der Speichereinheit gespeichert sind, so begrenzt werden, dass sie größer als eine halbe Länge des koordinierten Laser-Speckle-Bildes ist; des Weiteren muss ein Laser-Speckle-Bild-Erfassungsbereich der nichtverformbaren Laser-Speckle-Bilderfassungseinheit so begrenzt werden, dass er kleiner oder gleich einem zugelassenen beweglichen Abstand des nichtverformbaren Laser-Speckle-Bildes ist.

## Revendications

1.  Dispositif de positionnement angulaire de haute précision (1), comprenant :

    une unité de disque rotatif (11) ;
    une unité d'acquisition des images par granularités laser non déformable (12), étant utilisée pour l'émission d'une lumière cohérente à une surface de positionnement de l'unité de disque rotatif (11), de façon à acquérir une image par granularités laser non déformable de la surface de positionnement par la réception d'une lumière réfléchie provenant de la surface de positionnement ;
    une unité de calibration angulaire (13), étant utilisée pour la mesure et la calibration d'une coordonnée angulaire calibrée de l'image par granularités laser non déformable ;
    une unité de reconnaissance et de positionnement angulaire (14), étant couplée à l'unité d'acquisition des images par granularités laser non déformable (12) et l'unité de calibration angulaire (13) ; et
    une unité de stockage (14), étant utilisée pour le stockage de l'image par granularités laser non déformable acquise par l'unité d'acquisition des images par granularités laser non déformable (12) et la coordonnée angulaire calibrée mesurée par l'unité de calibration angulaire (13) ;

    dans lequel lorsque l'unité de disque rotatif (11) tourne d'un cercle complet, l'unité d'acquisition des images par granularités laser non déformable (12) pourrait par conséquent acquérir N feuilles d'image par granularités laser non déformable, et l'unité de calibration angulaire (13) voudrait mesurer simultanément N nombres de coordonnée angulaire calibrée pour les N feuilles d'image par granularités laser non déformable ; ainsi, la reconnaissance et le positionnement angulaire (14) est capable de définir N feuilles d'image par granularités laser non déformable coordonnée et N nombres d'angle coordonné selon les N coordonnées angulaires calibrées et les N images par granularités laser non déformables, et alors les N images par granularités laser non déformables coordonnées et les N angles coordonnés sont stockés dans l'unité de stockage (14) ;
    dans lequel lorsque l'unité de disque rotatif (11) tourne d'un angle arbitraire, l'unité d'acquisition des images par granularités laser non déformable (12) voudrait par conséquent acquérir une image par granularités laser non déformable immédiate, et l'unité de reconnaissance et de positionnement angulaire (14) voudrait trouver une ième image par granularités laser non déformable coordonnée possédant la plus grande zone de chevauchement avec l'image par granularités laser non déformable coordonnée par comparaison d'images entre l'image par granularités laser non déformable immédiate et les N images par granularités laser non déformables coordonnées dans l'unité de stockage (14), et ensuite calcule un déplacement planaire d'image immédiat entre l'image par granularités laser non déformable immédiate et la ième image par granularités laser non déformable coordonnée, de façon à calculer un angle sous-coordonné immédiat de l'image par granularités laser non déformable immédiate ;
    dans lequel une coordonnée angulaire immédiate pour l'image par granularités laser non déformable immédiate peut être calculée à travers un ième angle coordonné de l'ième image par granularités laser non déformable coordonnée et l'angle sous-coordonné immédiat.

2.  Dispositif de positionnement angulaire de haute précision selon la revendication 1, dans lequel la surface de positionnement est choisie parmi le groupe constitué de la surface supérieure de l'unité de disque rotatif, de la surface de coté de l'unité de disque rotatif et de la surface inférieure de l' unité de disque rotatif.

3.  Dispositif de positionnement angulaire de haute précision selon la revendication 1, dans lequel la pluralité du module de bibliothèque de comparaison d'images est choisie parmi le groupe constitué de :

SAD (Somme de Différence Absolue), SSD (Somme de l'Écart Quadratique), NCC (Corrélation Croisée Normalisée) et SIFT (Transformation de Caractéristiques Visuelles Invariante à l'Échelle).

4. Dispositif de positionnement angulaire de haute précision selon la revendication 1, dans lequel l'unité d'acquisition des images par granularités laser non déformable comprend :

un élément émettant de la lumière, étant utilisé pour l'émission d'une lumière laser à la surface de positionnement de l'unité de disque rotatif ;
une ouverture d'étage avant, étant utilisée pour la filtration de lumières diffusées de la lumière laser ;
une lentille, étant utilisée pour la formation de l'image par granularités laser non déformable attribuable au fait de faire émettre de la lumière laser à la surface de positionnement ;
une ouverture d'étage arrière, étant utilisée pour le contrôle de la taille des granularités laser de la lumière réfléchie provenant de la surface de positionnement de l'unité de disque rotatif ;
un capteur d'images 2D, étant un capteur d'images CCD ou un capteur d'images CMOS ;
dans lequel l'image par granularités laser non déformable formée à travers la lentille est captée et enregistrée par le capteur d'images.

5. Dispositif de positionnement angulaire de haute précision selon la revendication 4, dans lequel l'unité de calibration angulaire est choisie parmi le groupe constitué du calibreur dynamique Agilent® 5530, du gyroscope laser à inertie et du gyroscope à fibre optique à inertie.

6. Dispositif de positionnement angulaire de haute précision selon la revendication 5, dans lequel l'unité de calibration angulaire est le susmentionné gyroscope laser à inertie, les angles coordonnés, les angles sous-coordonnés immédiats et l'angle immédiat de l'image par granularités laser non déformable immédiate peut être calculé en utilisant les équations suivantes : (1) $\theta_i = (k_i + \phi_i/360) \times (360/\Sigma k)$, (2) $\theta sub = \Delta d(360°/\Sigma D)$, et (3) $\theta_{imme} = \theta_i + \theta sub$; dans lesquelles :

$\theta_i$ représente le ième angle coordonné de la ième image par granularités laser non déformable ;
$\theta sub$ représente l'angle sous-coordonné immédiat de l'image par granularités laser non déformable immédiate ;

$(k_i + \Phi_i/360)$ représente un nombre de périodes de cumul d'un signal de fréquence de battements pour la ième image par granularités laser non déformable coordonnée, dans lequel le signal de fréquence de battements sera délivré en sortie par le gyroscope laser à inertie ;
$Ek$ représente un nombre total de périodes de cumul du signal de fréquence de battements après que l'unité de disque rotatif ait tourné d'un cercle complet ;
$\Delta d$ représente le déplacement planaire d'image immédiat entre l'image par granularités laser non déformable immédiate et la ième image par granularités laser non déformable coordonnée ;
$\Sigma D$ représente un déplacement total planaire d'image après que l'unité de disque rotatif ait tourné d'un cercle complet ;
$\theta_{imme}$ représente la coordonnée angulaire immédiate de l'image par granularités laser non déformable immédiate.

7. Dispositif de positionnement angulaire de haute précision selon la revendication 5, dans lequel l'unité de calibration angulaire est le susmentionné gyroscope à fibre optique à inertie, les angles coordonnés, les angles sous-coordonnés immédiats et l'angle immédiat de l'image par granularités laser non déformable immédiate peut être calculé en utilisant les équations suivantes : (1) $\theta_i = \theta_i' - \theta_1'$, (2) $\theta sub = \Delta d(360°/\Sigma D)$, et (3) $\theta_{imme} = \theta_i + \theta sub$; dans lesquelles :

$\theta_i$ représente le ième angle coordonné de la ième image par granularités laser non déformable ;
$\theta_1'$ représente une ième coordonnée angulaire calibrée délivrée en sortie par le gyroscope à fibre optique à inertie ;

$$\theta_1 = \theta_1' + \theta_1' = 0 \;;$$

$\theta sub$ représente l'angle sous-coordonné immédiat de l'image par granularités laser non déformable immédiate ;
$\Delta d$ représente le déplacement planaire d'image immédiat entre l'image par granularités laser non déformable immédiate et la ième image par granularités laser non déformable coordonnée ;
$\Sigma D$ représente un déplacement total planaire d'image après que l'unité de disque rotatif ait tourné d'un cercle complet ;
$\theta_{imme}$ représente la coordonnée angulaire immédiate de l'image par granularités laser non déformable immédiate.

8. Dispositif de positionnement angulaire de haute précision selon la revendication 5, dans lequel l'unité de calibration angulaire est le susmentionné calibreur dynamique Agilent® 5530, les angles coordonnés, les angles sous-coordonnés immédiats et l'angle immédiat de l'image par granularités laser non déformable immédiate peut être calculé en utilisant les équations suivantes : (1) $\theta sub = \Delta d(360°/\Sigma D)$ et (2) $\theta_{imme} = \theta_i + \theta sub$ ; dans lesquelles :

$\theta_i$ représente le ième angle coordonné de la ième image par granularités laser non déformable ;

$\theta sub$ représente l'angle sous-coordonné immédiat de l'image par granularités laser non déformable immédiate ;

$\Delta d$ représente le déplacement planaire d'image immédiat entre l'image par granularités laser non déformable immédiate et la ième image par granularités laser non déformable coordonnée ;

$\Sigma D$ représente un déplacement total planaire d'image après que l'unité de disque rotatif ait tourné d'un cercle complet ;

$\theta_{imme}$ représente la coordonnée angulaire immédiate de l'image par granularités laser non déformable immédiate.

9. Dispositif de positionnement angulaire de haute précision selon la revendication 4, dans lequel la différence maximale relative de longueur du chemin optique entre deux images par granularités laser coordonnées non déformables adjacentes quelconques doit être limitée à être plus petite qu'un cinquième de la longueur d'onde de la lumière laser ; de plus, une longueur chevauchante entre deux images par granularités laser coordonnées adjacentes quelconques stockées dans l'unité de stockage doit être limitée à être plus grande qu'une moitié de la longueur de l'image par granularités laser coordonnée ; en outre, une fenêtre d'acquisition des images par granularités laser de l'unité d'acquisition des images par granularités laser non déformable doit être limitée à être plus petite ou égale à une distance amovible permise de l'image par granularités laser non déformable.

FIG. 1
(Prior Art)

FIG. 2
(Prior Art)

FIG. 3

FIG. 4A

FIG. 4B

FIG. 4C

FIG. 5

FIG. 6A

FIG. 6B

FIG. 7

(e)  (a)

+5.6 pixel

(b)  (c)  (d)

-0.05 pixel  -5.60 pixel  -11.28 pixel

FIG. 8

EP 2 884 240 B1

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2641694 A